**Europäisches Patentamt**

**European Patent Office**

**Office européen des brevets**

(19)

(11) Veröffentlichungsnummer: **0 113 427**

**B1**

(12) # EUROPÄISCHE PATENTSCHRIFT

(45) Veröffentlichungstag der Patentschrift:
13.08.86

(21) Anmeldenummer: **83112007.6**

(22) Anmeldetag: **30.11.83**

(51) Int. Cl.⁴: **G 01 N 27/07**

(54) **Elektrische Messsonde und Verfahren zum Herstellen der Sonde.**

(30) Priorität: **08.12.82 DE 3245426**

(43) Veröffentlichungstag der Anmeldung:
**18.07.84 Patentblatt 84/29**

(45) Bekanntmachung des Hinweises auf die Patenterteilung:
**13.08.86 Patentblatt 86/33**

(84) Benannte Vertragsstaaten:
**AT BE DE FR GB IT NL**

(56) Entgegenhaltungen:
**DE-A-3 006 877**
**FR-A-2 383 448**
**US-A-1 670 640**
**US-A-3 940 732**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Bödecker, Kay, Lindenstrasse 20, D-8224 Chieming / Obb (DE)**
Erfinder: **Goth, Walter, Staufenstrasse 28, D-8230 Bad Reichenhall / Obb. (DE)**
Erfinder: **Scheurl, Robert, Kienau 4, D-8221 Inzell / Obb. (DE)**
Erfinder: **Strasser, Hans- Erwin, Lerchenmoosweg 8a, D-8227 Siegsdorf / Obb. (DE)**

## Beschreibung

Die Erfindung betrifft eine elektrische Meßsonde zum Erfassen der elektrischen Leitfähigkeit eines flüssigen Meßguts mit einer von dieser zu durchströmenden und zwischen Elektroden mit einem elektrischen Strom zu beaufschlagenden Meßstrecke in Sondenlängsrichtung, wobei die Elektroden von dem Meßgut abgeschinnte elektrische Zuleitungen besitzen und die von dem Meßgut abgeschinnten Teile der Elektroden ein mechanisch stabilisierendes sowie elektrisch leitendes Leitergerüst eines elektrisch isolierenden und die Foim der Sonde bestimmenden Hüllenkörpers bilden.

Elektrische Meßsonden vorgenannter Art werden beispielsweise zum Überwachen der Konzentration von Reinigungs- und Desinfektionsbädern in druckbeaufschlagten Rohrleitungen eingesetzt. In der Regel wird in solchen Fällen der elektrische Widerstand des Meßguts, d.h. der Flüssigkeit, gemessen. Bei chemisch aggressivem Meßgut müssen die mit der Flüssigkeit in Berührung kommenden Bestandteile der Meßsonde chemisch ausreichend beständig sein. Die Meßsonde muß ferner so ausgebildet werden, daß ihre Meßgenauigkeit auch unter Temperaturschwankungen zwischen beispielsweise 10°C und 95°C nicht leidet.

Zum überwiegenden Teil werden die Meßsonden aus spanabhebend bearbeitetem, thermoplastischem Kunststoffhalbzeug hergestellt, wobei Formteile aus Elektrokohle, Edelstahl bzw. Edelmetall für die elektrische Verbindung zum Meßgut vorgesehen werden können.

Das Abdichten zwischen den elektrisch leitenden Formteilen und den Kunststoffteilen erfolgt beispielsweise mit Hilfe von elastischen Dichtelementen. In einer solchen aus der DE-A-28 37 102 bekannten Ausführungsform sind mehrere kreisförmige Elektroden konzentrisch zueinander und gegeneinander durchzwischengelegten thermoplastischen Kunststoff isoliert.

Schwierigkeiten im Betrieb treten bei diesen Meßsonden oder Meßzellen vor allem wegen der unterschiedlichen thermischen Ausdehnungskoeffizienten der leitenden Metall- bzw. Kohleformteile einerseits und der isolierenden Kunststoffteile andererseits auf. Hieraus ergeben sich Rißbildung an den isolierenden Kunststoffteilen, Ablösung an den Grenzflächen und ein Nachlassen der Vorspannung elastischer Dichtelemente. Die resultierende Undichtheit an der Grenze von leitenden zu isolierenden Teilen führt sowohl zu Isolier- und damit zu Meßfehlern als auch zu Korrosion und Zerstörung der Einzelteile, insbesondere der elektrischen Versorgungsleitung.

In der DE-A-30 06 877 wird daher eine vorzugsweise zum Liefern von Analogdaten ausgelegte Meßsonde vorgeschlagen, in der die von dem flüssigen Meßgut abzuschirmenden Teile der elektrischen Zuleitungen ein mechanisch stabilisierendes Einlagegerüst eines mit dem Material der Zuleitungen eine sogenannte Gummi-Metall-Verbindung eingehenden, elektrisch isolierenden und die Form der Sonde bestimmenden Elastomer-Hüllenkörpers bilden. Diese Meßsonde stellt zwar schon einen Fortschritt gegenüber dem bisherigen Stand der Technik dar, sie kann aber nicht in chemisch so aggressivem Meßgut, wie Salpetersäure und Natronlauge, eingesetzt werden, da bekannte Elastomere unter diesen Betriebsbedingungen auf die Dauer nicht beständig sind. Problematisch ist die bekannte Sonde auch wegen der nach wie vor bei starken Temperaturschwankungen auftretenden erheblichen Wärmespannungen.

Der Erfindung liegt die Aufgabe zugrunde, die eingangs genannte Meßsonde so weiterzubilden, daß sie auch in den extrem chemisch aggressiven Medien einzusetzen ist und hierbei selbst bei häufigen starken Temperaturschwankungen um bis zu 80°C und mehr einwandfreie, von der Temperatur unabhängige Meßdaten liefert. Die erfindungsgemäße Lösung besteht darin, daß das Einlagegerüst im Hüllenkörper in Bezug auf die Sondenlängsachse symmetrisch ausgebildete und angeordnete Einzelleiter enthält und daß der Hüllenkörper im Spritzgußverfahren hergestellt ist sowie aus einem chemisch beständigen, thermoplastischen Kunststoff besteht.

Demgemäß weist die erfindungsgemäße, vorzugsweise zum Liefern von Analogdaten ausgebildete Meßsonde sowohl eine sichere Verbindung zwischen Isolierung und elektrischen Zuleitungen als auch die zum Einsatz in stark strömenden und stark verschmutzten Medien erforderliche mechanische Steifheit sowie chemische Beständigkeit und Verschleißfestigkeit auf. Durch die symmetrische Gestaltung werden entsprechend symmetiisch verteilte Wärmedruckspannungen erreicht, so daß auch bei wechselnden Wärmedruckspannungen weder ein Ablösen des Kunststoffs an den Grenzflächen zu den Metallteilen und damit Undichtheiten noch durch mechanische Verspannungen begründete Meßfehler auftreten.

Gemäß weiterer Ausgestaltung der Erfindung sind außer dem Einlagegerüst selbst ein diesem Metallgerüst zugeordnetes isolierendes Aufnahmestück mit daran anschließender Kabeldurchführung sowie die mit dem Einlagegerüst fest verbundenen und allein mit dem Meßgut in Berührung stehenden Elektroden bzw. Meßelemente, insbesondere aus Edelmetall, symmetrisch in Bezug auf die Symmetrieachse ausgebildet und angeordnet. Der chemisch beständige, elektrisch nicht leitende, thermoplastische Kunststoff wird dabei so verteilt, daß er das gesamte Gerüst, eventuell einschließlich eines zur Temperaturkompensation vorgesehenen Varistors mit Zuleitungen, so umhüllt, daß nur die Meßflächen der Meßelemente und die außerhalb des Meßgutes befindliche Kabeldurchführung freibleiben.

Das Herstellen dei erfindungsgemäßen Meßsonde erfolgt vorzugsweise dadurch, daß das Einlagegerüst zum Umhüllen mit dem thermoplastischen Kunststoff in eine Werkzeugform eingelegt wird und daß das dabei nicht vom Gerüst ausgefüllte Volumen im Spritzverfahren mit thermoplastischem Kunststoff ausgefüllt wird. Als Kunststoff werden hierbei vorzugsweise Äthylen/Tetrafluoräthylen-Copolymere eingesetzt, die gerade im vorliegenden Zusammenhang wegen ihrer universellen chemischen Beständigkeit und hohen Dauergebrauchstemperatur von bis zu 150° C von besonderem Wert sind. Infrage kommen insbesondere die von der Firma Hoechst AG unter dem Warenzeichen "Hostaflon" gelieferten Kunststoffe ETVP 6235 oder TFA LP 6500. Ein wesentlicher Vorteil dieser teilkristallinen Copolymere ist das Längs- zu Querschrumpfverhältnis von ca. 1:2 beim Erkalten nach dem Spritzvorgang. Durch dieses günstige Schrumpfverhältnis entsteht eine innige, druckdichte Verbindung zwischen dem thermoplastischen Kunststoff und dem metallischen Grundgerüst.

Zum optimalen Abstützen der im Betrieb auftretenden Wärmedruckspannungen zwischen Kunststoff und Metall ist es gemäß weiterer Ausbildung der Erfindung besonders günstig, wenn die metallischen Leiter des Gerüstes sandgestrahlt oder aber in gewissen, insbesondere regelmäßigen Abständen mit Einstichen versehen werden. Hierdurch wird eine formschlüssige Verbindung zwischen Kunststoff und metallischem Einlagegerüst geschaffen, das eine Gegeneinanderbewegung dieser Teile auch in den Grenzflächen und bei sehr hohen Wärmedruckspannungen praktisch ausschließt.

Anhand der schematischen Darstellung eines Ausführungsbeispiels werden weitere Einzelheiten der Erfindung erläutert. Es zeigen:

Fig. 1 einen Längsschnitt durch eine Meßsonde;

Fig. 2 einen Schnitt längs der Linie II-II von Fig. 1; und

Fig. 3 einen Schnitt längs dei Linie III-III von Fig. 1.

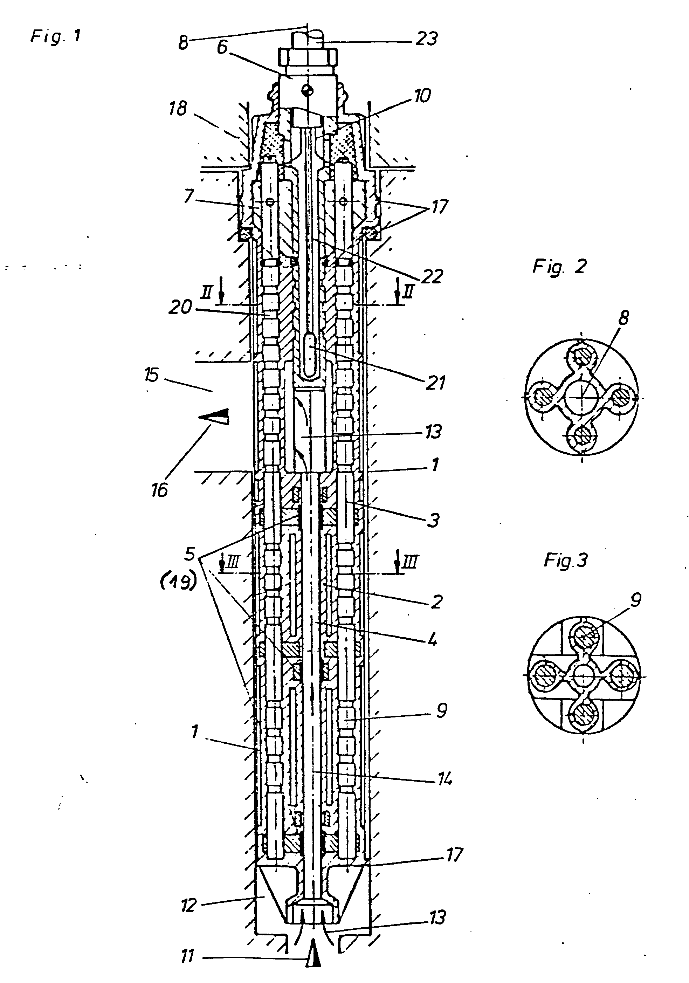

Die insgesamt mit 1 bezeichnete Meßsonde gemäß Fig. 1 bis 3 besteht im wesentlichen aus einer im Spritzgußverfahren hergestellten, elektrisch isolierenden, thermoplastischen Kunststoffhülle 2 mit darin symmetrisch angeordnetem, stabilem, metallischem Einlage- bzw. Leitergerüst 3. Die Kunststoffhülle 2 umschließt alle Teile des Leitergerüsts 3, die mit dem Meßgut 4 nicht in Berührung kommen dürfen. Dabei bleiben lediglich die mit dem Leitergerüst 3 fest verbundenen, vorzugsweise aus Edelmetall bestehenden, Elektroden bzw. Meßelemente 5 und die außerhalb des Meßgutes 4 befindliche Kabeldurchführung 6 frei. Das in dem ebenfalls eingehüllten, isolierenden Aufnahmestück 7 gehaltene metallische Leitergerüst 3 besteht im Ausführungsbeispiel im wesentlichen aus vier symmetrisch um die Sondenlängsachse 8 verteilten langgestreckten Einzelleitern 9 (vergleiche insbesondere Fig. 2 und 3). Wegen dieser axial-symmetrischen Verteilung der Einzelleiter 9 einschließlich deren Zuleitungsdrähte 10 zu dei Kabeldurchführung 6 können bei Temperaturschwankungen auftretende Wärmespannungen zwischen Kunststoffhülle und metallischem Leitergerüst 3 nicht zu einem Verzug dei Sonde 1 führen.

Für die als Beispiel zum Einsatz in sogenannten Durchflußarmaturen konzipierte Meßsonde 1 nach Fig. 1 ist angenommen, das Meßgut 4 fließe von einem Eingang 11 mit Flüssigkeitsraum 12 in Pfeilrichtung 13 durch eine Längsbohrung 14 zum Flüssigkeitsraum 15 am Ausgang 16. Der entsprechende Weg der Flüssigkeit wird mit Hilfe von an die Kunststoffhülle 2 angeformten Dichtkanten 17 sowie durch ein Anpreßteil 18 am gegenüberliegenden Längsende der Sonde 1 erzwungen.

Der elektrische Widerstand des vom Eingang 11 zum Ausgang 16 der Durchflußarmatur bewegten Meßguts 4 wird in der durch die Elektroden bzw. Meßelemente 5 definierten Meßstrecke 19 bestimmt, in dem ein über die Zuleitungsdrähte 10 und die Einzelleiter 9 zugeführter Strom innerhalb der Meßstrecke 19 durch die zu messende Flüssigkeit 4 geleitet und der Widerstand der Flüssigkeit gemessen wird. Vorzugsweise soll der Strom zwischen dem mittleren Meßelement der Meßstrecke 19 einerseits und deren beiden endständigen Meßelementen andererseits gemessen werden.

Wenn die einzelnen, axialsymmetrisch in der Meßsonde 1 angeordneten Leiter 9 des Leitergerüsts 3 aufgerauht, z.B. sandgestrahlt oder in mehr oder weniger regelmäßigen Abständen mit Einstichen 20 versehen werden, ergibt sich eine erheblich verbesserte mechanische und meßtechnische Stabilität der Sonde 1 gegenüber dem Fall glatter Außenflächen dei Einzelleiter 9, weil wegen der durch Aufrauhen oder durch Herstellen der Einstiche hervorgerufenen Formschlüssigkeit auch in den Grenzflächen von Kunststoff und Metall Relativbewegungen nicht mehr möglich sind.

Vor dem Zusammenbau bzw. beim Einlegen zum Verbinden der Teile des Leitergerüsts 3 mit dem Körper der Munststoffhülle 2 werden die Gerüstteile zweckmäßig mit Hilfe des isolierenden Aufnahmestücks 7 in die gewünschte räumliche Zuordnung gebracht. Das isolierende Aufnahmestück 7 kann außerdem einen zum Temperaturkompensieren vorteilhaften Varistor 21 mit Zuleitungen 22 enthalten. Die Varistor-Zuleitungen 22 können zusammen mit den Zuleitungen 10 des Leitergerüsts 3 nach außen über die Kabeldurchführung 6 zum Anschlußkabel 23 geführt sein.

**Bezugszeichenliste**

1 = Meßsonde
2 = thermoplastische Kunststoffhülle
3 =˙metallisches Leitergerüst
4 = Meßgut
5 = Meßelemente
6 = Kabeldurchführung
7 = isolierendes Aufnahmestück
8 = Sondenlängsachse
9 = Einzelleiter
10 = Zuleitungsdrähte (9)
11 = Eingang
12 = Flüssigkeitsraum
13 = Pfeilrichtung
14 = Längsbohrung
15 = Flüssigkeitsraum
16 = Ausgang
17 = Dichtkanten
18 = Anpreßteil
19 = Meßstrecke
20 = Einstich (9)
21 = Varistor
22 = Varistor-Zuleitung
23 = Anschlußkabel

**Patentansprüche**

1. Elektrische Meßsonde (1) zum Erfassen der elektrischen Leitfähigkeit eines flüssigen Meßguts (4) mit einer von diesem zu durchströmenden und zwischen Elektroden (5) mit einem elektrischen Strom zu beaufschlagenden Meßstrecke (19) in Sondenlängsrichtung (8), wobei die Elektroden (5) von dem Meßgut (4) abgeschirmte elektrische Zuleitungen (9) besitzen die von dem Meßgut agbeschirmten Teile der Elektroden ein mechanisch stabilisierendes sowie elektrisch leitendes Leitergerüst (3) eines elektrisch isolierenden und die Form der Sonde (1) bestimmenden Hüllenkörpers (2) bilden, dadurch gekennzeichnet daß das Einlagegerüst (3) im Hüllenkörper (2) in Bezug auf die Sondenlängsachse (8) symmetrisch ausgebildete und angeordnete Einzelleiter (9) enthält und daß der Hüllenkörper (2) im Spritzgußverfahren hergestellt sowie aus einem chemisch beständigen thermoplastischen Kunststoff besteht.

2. Meßsonde nach Anspruch 7, dadurch gekennzeichnet, daß das Leitergerüst (3) viel symmetrisch um die Sondenlängsachse (8) verteilte Einzelleiter (9) aufweist, die in Umfangsrichtung gesehen gleichen Abstand voneinander haben.

3. Meßsonde nach Anspruch 1 oder 2, dadurch gekennzeichnet, daß ein dem metallischen Leitergerüst (3) zugeoidnetes isolierendes Aufnahmestück (7) mit daran anschließender Kabeldurchführung (6) sowie die mit dem Leitergerüst (3) fest verbundenen und allein mit dem Meßgut (4) in Berührung stehenden, insbesondere aus Edelmetall hergestellten Elektroden (5) ebenfall symmetrisch in Bezug auf die Sondenlängsachse (8) ausgebildet und angeordnet sind.

4. Meßsonde nach einem der Ansprüche 1 bis 3, dadurch gekennzeichnet, daß die metallischen Einzelleiter (9) des Leitergerüsts (3) sandgestrahlt und/oder in regelmäßigen Abständen mit Einstichen (20) versehen sind.

5. Meßsonde nach einem oder mehreren der Ansprüche 1 bis 4, dadurch gekennzeichnet, daß als thermoplastischer Kunststoff Ethylen/Tetrafluorethylen-Copolymer, insbesondere mit einer Dauergebrauchsfähigkeit bis zu einer Temperatur von 150° C, vorgesehen ist.

**Claims**

1. Electrical measuring probe (1), for the detection of the electrical conductivity of a liquid measurement object (4), with a measurament path (19), to be flowed through by this and to be acted on by an electrical current between electrodes (5), in longitudinal direction (8) of the probe, wherein tha electrodes (5) possess electrical supply lines (9), which are screened from the measurement object (4), and those parts of the electrodes, which are screened from the messurement object, form a mechanically stabilising as well as electrically conducting conductor structure (3) of an electrically insulsting sheath body (2) determining the shape of the probe (1), characterised thereby, that the insert structure (3) in the sheath body (2) contains individual conductors (9) constructed and arranged symmetrically with respect to the longitudinal axis (8) of the probe and that tha sheath body (2) is made in the injection moulding process as well as consists of a chemically resistant thermoplastic synthetic material.

2. Measuring probe according to claim 1, characterised thereby, that the conductor structure (3) displays four individual conductors (9), which are distributed symmetrically around the longitudinal axis (8) and seen in circumferential direction have the same spacing one from the other.

3. Measuring probe according to claim 1 or 2, characterised thereby, that an insulating receiving member (7), associated with the metallic conductor structure (3) and with cable feedthrough (6) adjoining thereat, as well as the electrodes (5), which are firmly connected with the conductor structure (3) and alone stand in contact with the messurement object (4) and are in particular made of precious metal are likewise constructed and arranged symmetrically with respect to the longitudinal axis (8) of the probe.

4. Measuring probe according to one of the claims 1 to 3, characterised thereby, that the metallic individual conductors (9) of the conductor structurs (3) are sand-blasted and/or provided with recesses (20) at regular spacings.

5. Measuring probe according to one or more of the claims 1 to 4, characterised thereby, that ethylene/tetrafluorethylene copolymer, in particular with a capability of continuous use up to a temperature of 150°, is provided as thermoplastic synthetic material.

**Revendications**

1. Sonde de mesure électrique (1) adaptée pour détecter la conductivité électrique d'une matière liquide de mesure (4), pourvue dans sa direction longitudinale (8) d'un parcours de mesure (19) destiné à être parcouru par cette matière et à être soumis à un courant électrique entre des électrodes (5), ces électrodes (5) comportant des conducteurs d'alimentation électrique (9) protégés vis-à-vis de la matière de mesure (4) et ayant des parties protégées vis-à-vis de la matière de mesure qui constituent une armature conductrice (3) stabilisant mécaniquement et conductrice de l'électricité, cette sonde étant, en outre, pourvue d'un corps d'enveloppe (2) électriquement isolant et déterminant sa forme, caractérisée par le fait que l'armature (3) contient des conducteurs individuels constitués et disposés symétriquement dans le corps d'enveloppe (2) par rapport à l'axe longitudinal de la sonde (1) et que le corps d'enveloppe (2) est fabriqué par le procédé de moulage par injection et constitué d'une matière synthétique thermoplastique chimiquement stable.

2. Sonde de mesure selon la revendication 1, caractérisée par le fait que l'armature conductrice (3) comporte quatre conducteurs individuels (9), distribués symétriquement autour de l'axe longitudinal (8) de la sonde et qui sont équidistants en direction circonférentielle.

3. Sonde de mesure selon l'une ou l'autre des revendications 1 ou 2, caractérisée par le fait qu'une pièce de logement isolante (7) adjointe à l'armature métallique conductrice (3), avec traversée de câble (6) qui lui est raccordée, ainsi que les électrodes (5) reliées solidairement à l'armature conductrice (3), en contact seulement avec la matière de mesure (4) et en particulier fabriquées en métal noble, sont également constituées et disposées symétriquement par rapport à l'axe longitudinal (8) de la sonde.

4. Sonde de mesure selon l'une quelconque des revendications 1 à 3, caractérisée par le fait que les conducteurs individuels métalliques (9) de l'armature conductrice (3) sont sablés et/ou pourvus, à intervalles réguliers, de gorges ou rainures (20).

5. Sonde de mesure selon l'une quelconque des revendications 1 à 4, caractérisée par le fait qu'un copolymére éthylène/tétrafluoréthylène, en particularité ayant une aptitude à l'usage permanent jusqu'à une température de 150° C, est prévu en tant que matière synthétique thermoplastique.

Fig. 1

Fig. 2

Fig. 3